# EUROPEAN PATENT APPLICATION

(11) **EP 4 764 469 A1**
(43) Date of publication of application: **24.06.2026**
(21) Application number: 24902090.0
(22) Date of filing: 09.07.2024
(51) Int. Cl.: G01N 21/95, G01N 21/88, G01N 21/01

(54) **DETECTION DEVICE AND METHOD FOR DETECTING APPEARANCE OF BATTERY MODULE**

(30) Priority: 12.12.2023 CN 202311700378
(71) Applicant: Contemporary Amperex Technology Co., Limited, Ningde, Fujian 352100 (CN)
(72) Inventor: LUO, Wei, Ningde, Fujian 352100 (CN); YANG, Chaohong, Ningde, Fujian 352100 (CN); QIU, Guijia, Ningde, Fujian 352100 (CN)
(74) Representative: Lorenz Seidler Gossel Part. mbB
(86) International application number: PCT/CN2024/104514
(87) International publication number: WO 2025/123663

(57) **Abstract**

The present application relates to a detection device and detection method for detecting the appearance of a battery module, and discloses a detection device for detecting the appearance of a battery module, where a lifting mechanism is capable of causing the battery module to stay at at least two heights different from an initial height, at a first height, a first end surface image acquisition apparatus acquires an image of a first end surface, and a second end surface image acquisition apparatus acquires an image of a second end surface; at a second height, a second image acquisition apparatus acquires images of a first side surface and a second side surface, and a third image acquisition apparatus acquires images of a third side surface and a fourth side surface; and where a flipping mechanism is capable of flipping the battery module, so that the first side surface or the second side surface of the battery module and the third side surface or the fourth side surface of the battery module face a second image acquisition mechanism and a third image acquisition mechanism, respectively. The present application further discloses a corresponding detection method for detecting the appearance of a battery module using the detection device.

## Description

### CROSS-REFERENCE TO RELATED APPLICATIONS

The present application claims priority to Chinese Patent Application No. 202311700378.8, entitled "DETECTION DEVICE AND DETECTION METHOD FOR DETECTING APPEARANCE OF BATTERY MODULE" and filed on December 12, 2023, which is incorporated herein by reference in its entirety.

### TECHNICAL FIELD

The present application relates to the field of batteries, and in particular, to a detection device and a corresponding detection method for detecting the appearance of a battery module.

### BACKGROUND

Power batteries are the core components of new energy vehicles and represent a critical direction for future energy transformation. In order to meet the requirements for the energy density of a battery, the battery may typically include one or more battery modules connected in series and/or in parallel.

The battery module is generally in the shape of a rectangular parallelepiped, mainly including the bottom side surface, the top side surface, the front and back side surfaces, and the left and right end surfaces. Defects and flaws on the six appearance surfaces of the battery module will directly affect the quality of the battery module.

To ensure the quality of the battery module, during the production process, manual visual inspection is usually performed to check for various flaws on the six appearance surfaces of the module, including dirt, scratches, defects, foreign matter, PIN deflection, etc. However, this manual detection is greatly affected by the subjective judgment of the detection personnel, consequently leading to inconsistent detection results.

Therefore, there is a need for an automatic module appearance detection device that can meet the module appearance detection requirements. In addition, since the factory production line layout is fixed at the initial planning stage, if the appearance detection device is too complex, it will lead to high device introduction costs and a long introduction cycle. Therefore, there is also a need for an automatic module appearance detection device with a relatively simple device structure.

### SUMMARY OF THE INVENTION

In view of the above problems, the present application provides a detection device and a corresponding detection method for detecting the appearance of a battery module, which avoid the defects of manual detection such as high costs, low efficiency and susceptibility to errors.

The present application provides a detection device and detection method for detecting the appearance of a battery module. According to the first aspect, the present application provides a detection device for detecting the appearance of six surfaces of a battery module, where the battery module has a longitudinal direction, a transverse direction perpendicular to the longitudinal direction, and a depth direction perpendicular to the longitudinal direction and perpendicular to the transverse direction, and includes a first end surface and a second end surface opposite to each other in the longitudinal direction, a first side surface and a second side surface opposite to each other in the depth direction, and a third side surface and a fourth side surface opposite to each other in the transverse direction, characterized in that, the detection device includes: a lifting mechanism, where the lifting mechanism is capable of moving the battery module in a vertical direction, so that the battery module is capable of staying at a height different from an initial height; a flipping mechanism, where the flipping mechanism is capable of flipping the battery module; a first image acquisition mechanism, where the first image acquisition mechanism includes a first end surface image acquisition apparatus configured to acquire an image of the first end surface of the battery module and a second end surface image acquisition apparatus configured to acquire an image of the second end surface of the battery module; a second image acquisition mechanism, where the second image acquisition mechanism includes a second image acquisition apparatus configured to acquire images of the first side surface and the second side surface; a third image acquisition mechanism, where the third image acquisition mechanism includes a third image acquisition apparatus configured to acquire images of the third side surface and the fourth side surface; where the lifting mechanism is capable of causing the battery module to stay at at least two heights different from the initial height, at a first height, the first end surface image acquisition apparatus acquires the image of the first end surface, and the second end surface image acquisition apparatus acquires the image of the second end surface; at a second height, the second image acquisition apparatus acquires the images of the first side surface and the second side surface, and the third image acquisition apparatus acquires the images of the third side surface and the fourth side surface; and where the flipping mechanism is capable of flipping the battery module, so that the first side surface or the second side surface of the battery module and the third side surface or the fourth side surface of the battery module face the second image acquisition mechanism and the third image acquisition mechanism, respectively.

In the technical solution of the embodiment of the present application, mechanical detection of the battery module can be implemented by arranging the lifting mechanism, the flipping mechanism, and the image acquisition mechanism. At the same time, image acquisition of the battery module can be implemented in a smaller working region and detection of the flaws of the appearance is carried out. Moreover, since the detection device of the present application does not need to transport the battery module multiple times, and can collect the images of the six surfaces of the battery module at one workstation only by flipping and lifting, the detection pace is fast and the detection efficiency is high. In addition, since the detection device of the present application occupies a small area, the mechanical structure and the visual system are relatively easy to arrange, and thus the difficulty of introducing the detection device into a production line is relatively low. At the same time, the production line achieves low transformation costs and a high transformation speed. In particular, a simple implementation method for image acquisition of the six appearance surfaces of the battery module and detection of the flaws of the appearance in a relatively small working region is provided.

In some embodiments, the lifting mechanism includes a lifting rod being capable of being driven by a driving apparatus, and the lifting rod is capable of lifting the battery module from a position below the battery module in the depth direction. In this way, the lifting mechanism can be easily implemented.

In some embodiments, a support plate is arranged on an end portion of the lifting rod close to the battery module, and the support plate is configured to support the battery module from the position below the battery module in the depth direction. In this way, the lifting of the battery module can be more stable.

In some embodiments, a plurality of lifting rods are arranged in the longitudinal direction of the battery module, and configured to lift the battery module from the position below the battery module in the depth direction. In this way, the lifting of the battery module can be more stable.

In some embodiments, the battery module is carried on a carrying tray; the lifting rod is capable of lifting the carrying tray from a position below the carrying tray to indirectly lift the battery module, or the lifting rod is capable of passing through a through opening arranged in the carrying tray to lift the battery module. In this way, the vertical movement of the battery module by the lifting mechanism can be achieved when the carrying tray is present.

In some embodiments, the flipping mechanism flips the battery module around a central long axis of the battery module in the longitudinal direction, and the central long axis is an axis in a direction of a central long side of four long sides of the battery module. In this way, it helps to make the flipping operation of the battery module more stable.

In some embodiments, the flipping mechanism includes a clamping apparatus configured to clamp the battery module and a flipping apparatus configured to flip the battery module. In this way, the flipping mechanism for flipping the battery module can be easily implemented.

In some embodiments, the clamping apparatus includes two clamping plates, configured to push the battery module from the first end surface and the second end surface of the battery module so as to clamp the battery module; and moving apparatuses used for the clamping plates, respectively, where each moving apparatus includes: a slider fixedly connected to the clamping plate, a driving cylinder fixedly connected to the slider to move the slider, and a slide rail configured to guide movement of the slider. In this way, the clamping apparatus can be implemented easily, thereby clamping the battery module by the flipping mechanism.

In some embodiments, the flipping apparatus includes a rotating cylinder, and the rotating cylinder is fixedly connected to both the slider and one of the clamping plates. In this way, the battery module can be easily flipped by the flipping mechanism.

In some embodiments, a photoelectric switch is arranged on the slider, and a blocking block configured to block the photoelectric switch is arranged on the clamping plate. In this way, the position of the flipping apparatus can be determined easily, thereby implementing flipping of the flipping apparatus in accordance with the angle requirement.

In some embodiments, the first end surface image acquisition apparatus is constructed to include at least one first end surface image acquisition camera, and a first end surface illuminating component is configured for the at least one first end surface image acquisition camera, and/or the second end surface image acquisition apparatus is constructed to include at least one second end surface image acquisition camera, and a second end surface illuminating component is configured for the at least one second end surface image acquisition camera. In this way, the first end surface image acquisition apparatus and the second end surface image acquisition apparatus can be implemented easily and the quality of the acquired image can be improved.

In some embodiments, the first end surface and the second end surface are surfaces where a wide side and a high side of the battery module are located, an annular first end surface illuminating component is configured for each first end surface image acquisition camera, and/or an annular second end surface illuminating component is configured for each second end surface image acquisition camera. In this way, the quality of the acquired image can further be improved.

In some embodiments, the second image acquisition apparatus is constructed to include at least one second image acquisition camera, and a second illuminating component is configured for the at least one second image acquisition camera. In this way, the second image acquisition apparatus can be implemented easily and the quality of the acquired image can be improved.

In some embodiments, the first side surface and the second side surface as well as the third side surface and the fourth side surface are surfaces where the long sides of the battery module are located; the at least one second image acquisition camera includes a plurality of second image acquisition cameras arranged in a straight line in a direction of the long side of the battery module; two second strip-shaped illuminating components are configured for the plurality of second image acquisition cameras, and the two second strip-shaped illuminating components are arranged symmetrically with respect to the straight line of the plurality of second image acquisition cameras. In this way, the quality of the acquired image can be improved, and the device costs can be saved.

In some embodiments, the third image acquisition apparatus is constructed to include at least one third image acquisition camera, and a third illuminating component is configured for the at least one third image acquisition camera. In this way, the third image acquisition apparatus can be implemented easily and the quality of the acquired image can be improved.

In some embodiments, the first side surface and the second side surface as well as the third side surface and the fourth side surface are surfaces where the long sides of the battery module are located; the at least one third image acquisition camera includes a plurality of third image acquisition cameras arranged in a straight line in a direction of the long side of the battery module; two third strip-shaped illuminating components are configured for the plurality of third image acquisition cameras, and the two third strip-shaped illuminating components are arranged symmetrically with respect to the straight line of the plurality of third image acquisition cameras. In this way, the quality of the acquired image can be improved, and the device costs can be saved.

In some embodiments, the detection device further includes a control system, and the control system is in communication connection with the lifting mechanism, the flipping mechanism, and the at least one image acquisition mechanism, respectively. In this way, the control system can be used to control the detection device, and the control system can be used to determine whether each appearance surface of the battery module is qualified.

According to the second aspect, the present application provides a detection method for detecting the appearance of a battery module using the detection device for detecting the appearance of a battery module disclosed in the present application, characterized in that, the detection method includes the following steps: using a lifting mechanism to move the battery module from an initial height to a first height; using a first image acquisition mechanism to acquire images of a first end surface and a second end surface of the battery module; using the lifting mechanism to move the battery module from the first height to a second height; using a second image acquisition mechanism to acquire an image of a first side surface of the battery module and using a third image acquisition mechanism to acquire an image of a third side surface of the battery module; using a flipping mechanism to flip the battery module for the first time, so that a second side surface of the battery module and a fourth side surface of the battery module face the second image acquisition mechanism and the third image acquisition mechanism, respectively; using the second image acquisition mechanism to acquire an image of the second side surface of the battery module and using the third image acquisition mechanism to acquire an image of the fourth side surface of the battery module; using the flipping mechanism to flip the battery module for the second time, so that the first side surface of the battery module and the third side surface of the battery module face the second image acquisition mechanism and the third image acquisition mechanism, respectively; and using the lifting mechanism to move the battery module from the second height to the initial height.

Therefore, by lifting and flipping the battery module, the six appearance surfaces of the battery module can be mechanically detected automatically. Moreover, since the six appearance surfaces of the battery module can be detected at one workstation, the appearance of the six surfaces of the battery module can be detected in a smaller working region, which occupies a small area, thereby making it easier to introduce the detection method into the production line.

In some embodiments, the first height is greater than the second height. In this way, the flipping mechanism can be mounted and arranged easily.

In some embodiments, the detection method further includes: before or after using the second image acquisition mechanism to acquire the image of the first side surface of the battery module and using the third image acquisition mechanism to acquire the image of the third side surface of the battery module, using the flipping mechanism to clamp the battery module and lowering the lifting mechanism at least to a height at which flipping of the battery module is not hindered. In this way, the flipping operation of the flipping mechanism can be easily implemented.

In some embodiments, the detection method further includes: after using the flipping mechanism to flip the battery module for the second time, raising the lifting mechanism to the second height, and causing the flipping mechanism to release the battery module. In this way, the battery module can be reset easily.

In some embodiments, the detection method further includes: before using the lifting mechanism to move the battery module from the initial height to the first height, detecting whether the battery module is on a detection station; if the battery module is on the detection station, causing a subsequent battery module to wait; and if the battery module is not on the detection station, causing the subsequent battery module to enter the detection station. In this way, automatic implementation of the detection device and the detection method disclosed in present application can be facilitated.

In some embodiments, the detection method further includes: after using the lifting mechanism to move the battery module from the second height to the initial height, using a control system to determine whether the acquired images of the first image acquisition mechanism, the second image acquisition mechanism, and the third image acquisition mechanism are qualified; if the acquired images are qualified, causing the battery module to enter a next workstation; and if the acquired images are unqualified, causing the battery module to enter a reject region. In this way, unqualified battery modules can be screened out easily.

In some embodiments, the detection method further includes: after using the lifting mechanism to move the battery module from the first height to the second height, first using the second image acquisition mechanism to acquire the image of the first side surface of the battery module, and then using the third image acquisition mechanism to acquire the image of the third side surface of the battery module. In this way, different image acquisition mechanisms can be prevented from interfering with each other during image acquisition.

In some embodiments, the detection method further includes: after using the flipping mechanism to flip the battery module for the first time, first using the second image acquisition mechanism to acquire the image of the second side surface of the battery module, and then using the third image acquisition mechanism to acquire the image of the fourth side surface of the battery module. In this way, different image acquisition mechanisms can be prevented from interfering with each other during image acquisition.

The foregoing description is merely an overview of the technical solutions of the present application. In order that technical means of the present application can be understood more clearly so that the technical means can be implemented according to content of the specification, and in order that the foregoing and other objectives, features, and advantages of the present application can be understood more clearly, specific implementations of the present application are described below.

### BRIEF DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. In addition, throughout the accompanying drawings, the same reference numeral is used to represent the same component.
FIG. 1 is a schematic structural diagram of a battery module according to some embodiments of the present application;
FIG. 2 is a schematic structural diagram of a detection device for detecting the appearance of a battery module according to some embodiments of the present application;
FIG. 3 is a schematic structural diagram of a lifting mechanism of the detection device of FIG. 2;
FIG. 4 is a schematic structural diagram of a flipping mechanism of the detection device of FIG. 2;
FIG. 5 is a partially enlarged view of the detection device of FIG. 2 showing a part of the flipping mechanism and a part of a first image acquisition mechanism;
FIG. 6 is a schematic structural diagram of a second image acquisition mechanism of the detection device of FIG. 2;
FIG. 7 is a schematic structural diagram of a third image acquisition mechanism of the detection device of FIG. 2;
FIG. 8 is a schematic diagram of an optical path in FIG. 6 and FIG. 7; and
FIG. 9 is a schematic flowchart of a detection method for detecting the appearance of a battery module using the detection device of FIG. 2 according to some embodiments of the present application.

The reference numerals in the specific implementations are as follows: battery module 10, first end surface 11, second end surface 12, first side surface 13, second side surface 14, third side surface 15, fourth side surface 16; detection device 20; lifting mechanism 100, lifting rod 110, support plate 111, carrying tray 120, through opening 121; flipping mechanism 200, clamping apparatus 210, clamping plate 211, slider 212, driving cylinder 213, slide rail 214, flipping apparatus 220, photoelectric switch 240; first image acquisition mechanism 300, first end surface image acquisition apparatus 310, second end surface image acquisition apparatus 320, first end surface illuminating component 330, second end surface illuminating component 340; second image acquisition mechanism 400, second image acquisition apparatus 410, second illuminating component 420; third image acquisition mechanism 500, third image acquisition apparatus 510, third illuminating component 520; detection method 30.

### DETAILED DESCRIPTION

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is merely an association that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the demand thereof in the market is also constantly expanding. The yield of battery modules that make up the power batteries has also increased year by year. Moreover, the new energy industry has increasingly stringent requirements on the quality of the power batteries, so the quality monitoring of the battery modules has become more and more sophisticated.

The inventors have noticed that the current manual visual inspection for various defects (including dirt, scratches, defects, foreign matter, PIN deflection, etc.) on the six appearance surfaces of the battery module is greatly affected by the subjective judgment of the detection personnel, consequently leading to inconsistent detection results. In addition, if a mechanical detection device is introduced, since the factory production line layout is fixed at the initial planning stage, if the appearance detection device is too complex, it will lead to high device introduction costs and a long introduction cycle. Therefore, there is a need for an automatic module appearance detection device that can meet the module appearance detection requirements and has a relatively simple device structure.

To this end, the present inventors propose a detection device and a corresponding detection method for detecting the appearance of a battery module. By arranging a lifting mechanism, a flipping mechanism and a plurality of groups of image acquisition mechanisms, image acquisition of six appearance surfaces of the battery module can be implemented in a smaller working region and appearance flaw detection can be performed based on this.

Since the detection device can collect images of the six surfaces of the battery module without transferring the battery module multiple times, that is, without continuously transferring the battery module between multiple workstations, the detection device achieves a fast detection pace and high detection efficiency.

Since the detection device occupies a small area, the mechanical structure and the visual system are relatively easy to arrange, and thus the difficulty of introducing the detection device into a production line is relatively low. Therefore, while replacing manual detection to meet the appearance detection needs of the battery module, the detection device achieves low production line transformation costs and a high transformation speed.

The detection device and the corresponding detection method for detecting the appearance of a battery module disclosed in the embodiments of the present application can be used not only to detect the appearance of the battery module, but also to detect the appearance of any object with six appearance surfaces, such as an object in a rectangular parallelepiped shape.

For ease of description, the following embodiments are illustrated by taking a battery module 10 in an embodiment of the present application as an example.

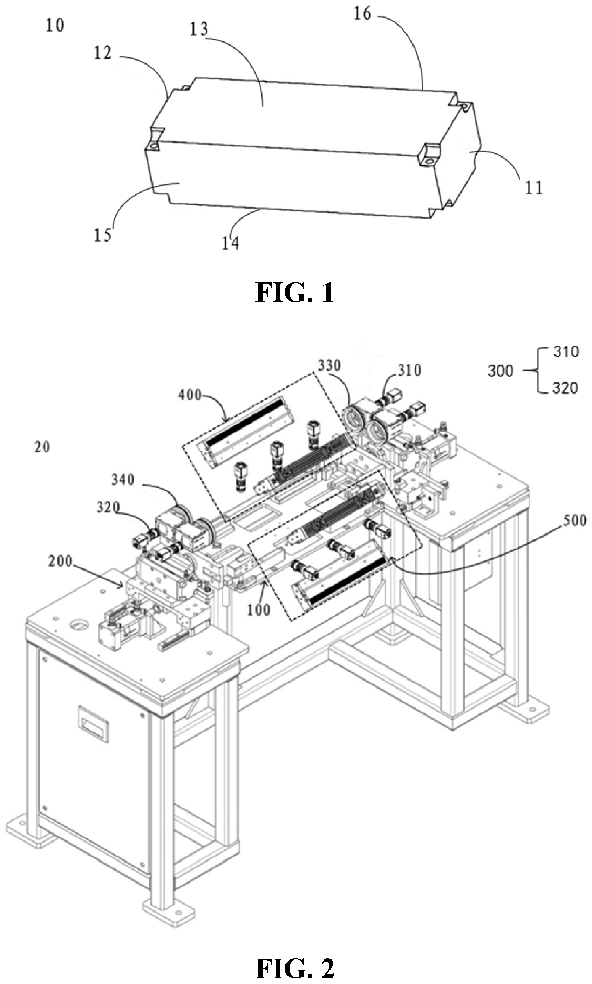

Referring to FIG. 1, FIG. 1 is a schematic structural diagram of a battery module 10 according to some embodiments of the present application. The battery module 10 has a longitudinal direction, a transverse direction perpendicular to the longitudinal direction, and a depth direction perpendicular to the longitudinal direction and perpendicular to the transverse direction, and includes six appearance surfaces, namely a first end surface 11 and a second end surface 12 opposite to each other in the longitudinal direction, a first side surface 13 and a second side surface 14 opposite to each other in the depth direction, and a third side surface 15 and a fourth side surface 16 opposite to each other in the transverse direction. For example, the battery module 10 may have a substantially rectangular parallelepiped shape.

In addition, although not shown, the battery module may further include an output electrode PIN and two input and output electrode metal sheets. The output electrode PIN can be configured to monitor the temperature of the battery module. An external instrument is connected to the battery module through the output electrode PIN to, for example, monitor the temperature of the battery module. The output electrode PIN may be located on one of the first end surface 11 and the second end surface 12 of the battery module. The two input and output electrode metal sheets can be configured to charge and discharge the battery module. The two input and output electrode metal sheets may be partially or completely exposed on left and right sides of the battery module, respectively, and can be seen from above.

As mentioned at the beginning of the present application, the quality of the battery module determines the quality of a device using the product to a certain extent, so the quality of the battery module should be detected accordingly. The detection may include the detection of the six appearance surfaces of the battery module itself, and may also include the detection of the position of the output electrode PIN of the battery module and the detection of surface flaws of the two input and output electrode metal sheets. All these detections can be implemented through image detection of the six appearance surfaces of the battery module.

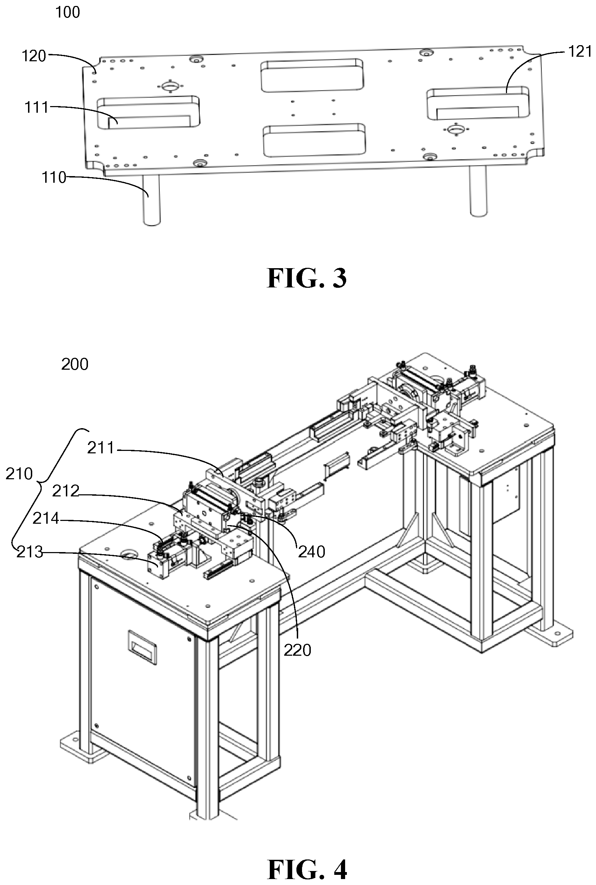

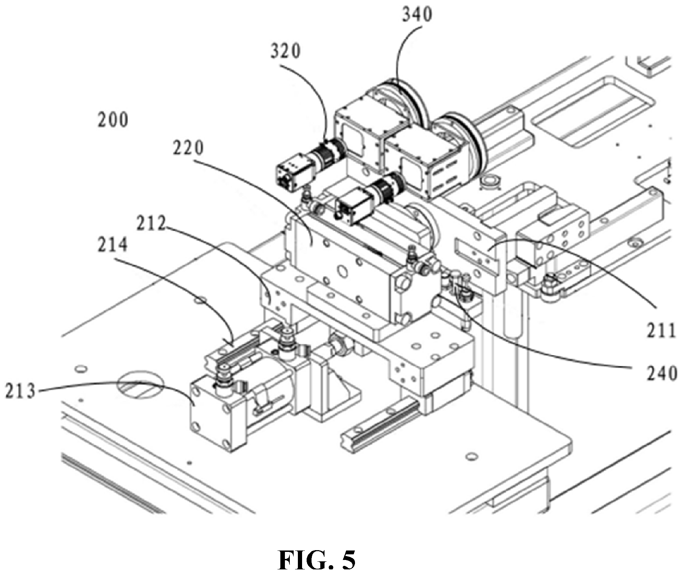

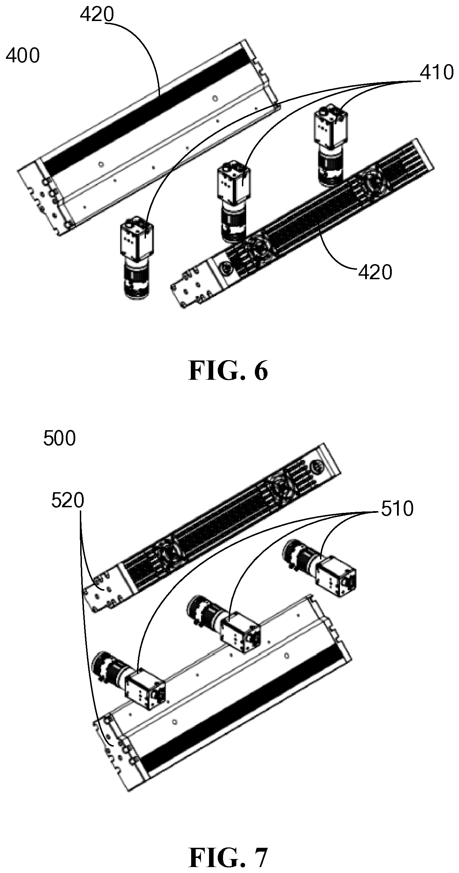

According to some embodiments of the present application, referring to FIG. 2, and further referring to FIG. 3 to FIG. 7, FIG. 3 is a schematic structural diagram of a lifting mechanism 100 of a detection device 20 of FIG. 2, FIG. 4 is a schematic structural diagram of a flipping mechanism 200 of the detection device 20 of FIG. 2, FIG. 5 is a partially enlarged view of the detection device 20 of FIG. 2 showing a part of the flipping mechanism 200 and a part of a first image acquisition mechanism 300, FIG. 6 is a schematic structural diagram of a second image acquisition mechanism 400 of the detection device 20 of FIG. 2, and FIG. 7 is a schematic structural diagram of a third image acquisition mechanism 500 of the detection device 20 of FIG. 2. The present application provides a detection device 20 for detecting the appearance of the battery module 10 as shown in FIG. 1. The detection device 20 may include: at least one image acquisition mechanism, a lifting mechanism 100, and a flipping mechanism 200.

The at least one image acquisition mechanism may be constructed to acquire images of the first end surface 11 and the second end surface 12 opposite to each other and/or the first side surface 13 and the second side surface 14 opposite to each other and/or the third side surface 15 and the fourth side surface 16 opposite to each other of the battery module 10. The lifting mechanism 100 can move the battery module 10 in a vertical direction, so that the battery module 10 can stay at a height different from an initial height. The flipping mechanism 200 can flip the battery module 10.

The lifting mechanism 100 can move the battery module 10 up or down, so that the battery module 10 can move from the initial height to another different height. At different heights, the at least one image acquisition mechanism and the flipping mechanism 200 can be used to detect the first end surface 11 and the second end surface 12 and/or the first side surface 13 and the second side surface 14 and/or the third side surface 15 and the fourth side surface 16 of the battery module 10. The at least one image acquisition mechanism, the lifting mechanism 100, and the flipping mechanism 200 may be controlled by a control system (which will be described hereinafter), and the at least one image acquisition mechanism may directly send images to the control system after image detection. The control system may use a corresponding detection model to perform image analysis to determine whether the corresponding appearance surface of the battery module 10 is qualified.

In this way, the appearance of the battery module 10 can be mechanically detected. In particular, when the battery module 10 arrives at a detection station shown in FIG. 2, the appearance of the battery module 10 can be automatically detected using the detection device 20. Moreover, since the six appearance surfaces of the battery module 10 can be detected at one workstation, the appearance of the six surfaces of the battery module can be detected in a smaller working region, which occupies a small area, thereby making it easier to introduce the detection device into the production line. The detection device 20 can be directly transformed above the original assembly line, does not require too much extra space on both sides of the assembly line, occupies small space, and achieves a high transformation speed, and a fast detection pace.

According to some embodiments of the present application, optionally, the at least one image acquisition mechanism may include a first image acquisition mechanism 300, a second image acquisition mechanism 400, and a third image acquisition mechanism 500. The first image acquisition mechanism 300 may include a first end surface image acquisition apparatus 310 configured to acquire an image of the first end surface 11 of the battery module 10 and a second end surface image acquisition apparatus 320 configured to acquire an image of the second end surface 12 of the battery module 10; the second image acquisition mechanism 400 may include a second image acquisition apparatus 410 configured to acquire images of the first side surface 13 and the second side surface 14; and the third image acquisition mechanism 500 may include a third image acquisition apparatus 510 configured to acquire images of the third side surface 15 and the fourth side surface 16. In this case, the lifting mechanism 100 can cause the battery module 10 to stay at at least two heights different from the initial height. At a first height, the first end surface image acquisition apparatus 310 can acquire the image of the first end surface 11, and the second end surface image acquisition apparatus 320 can acquire the image of the second end surface 12; and at a second height, the second image acquisition apparatus 410 can acquire the images of the first side surface 13 and the second side surface 14, and the third image acquisition apparatus 510 can acquire the images of the third side surface 15 and the fourth side surface 16. The flipping mechanism 200 can flip the battery module 10, so that the first side surface 13 or the second side surface 14 of the battery module 10 and the third side surface 15 or the fourth side surface 16 of the battery module 10 face the second image acquisition mechanism 400 and the third image acquisition mechanism 500, respectively.

That is, at the first height, the first image acquisition mechanism 300 can use the first end surface image acquisition apparatus 310 and the second end surface image acquisition apparatus 320 to respectively acquire the images of the first end surface 11 and the second end surface 12 of the battery module 10. At the second height, the second image acquisition mechanism 400 can use the second image acquisition apparatus 410 to acquire the image of the first side surface 13 of the battery module 10, and the third image acquisition mechanism 500 can use the third image acquisition apparatus 510 to acquire the image of the third side surface 15 of the battery module 10. Then, the flipping mechanism 200 can flip the battery module 10 by 180 degrees, causing the first side surface 13 or the second side surface 14 of the battery module 10 and the third side surface 15 or the fourth side surface 16 of the battery module 10 to face the second image acquisition mechanism 400 and the third image acquisition mechanism 500, respectively. Next, the second image acquisition mechanism 400 can use the second image acquisition apparatus 410 to acquire the image of the second side surface 14 of the battery module 10, and the third image acquisition mechanism 500 can use the third image acquisition apparatus 510 to acquire the image of the fourth side surface 16 of the battery module 10.

Thus, a simple implementation method for image acquisition of the six appearance surfaces of the battery module and detection of the flaws of the appearance in a relatively small working region is provided.

According to some embodiments of the present application, optionally, particularly with reference to FIG. 2 and FIG. 3, the lifting mechanism 100 may include a lifting rod 110 being capable of being driven by a driving apparatus, and the lifting rod 110 is capable of lifting the battery module 10 from a position below the battery module 10 in the depth direction. In this regard, the lifting rod 110 may be located below the battery module 10. The driving apparatus may be constructed as a driving cylinder.

In this way, the lifting mechanism 100 can be easily implemented.

According to some embodiments of the present application, optionally, particularly with reference to FIG. 3, a support plate 111 may be arranged on an end portion of the lifting rod 110 close to the battery module 10 and configured to support the battery module 10 from the position below the battery module 10 in the depth direction.

In this way, the lifting of the battery module 10 can be more stable.

According to some embodiments of the present application, optionally, particularly with reference to FIG. 3, a plurality of lifting rods 110 may be arranged in the longitudinal direction of the battery module 10, and configured to lift the battery module 10 from the position below the battery module 10 in the depth direction. In the embodiment of FIG. 3, two lifting rods 110 are arranged. Of course, it is also conceivable that a plurality of lifting rods 110 may be arranged in a direction of a wide side of the battery module 10 in a rectangular parallelepiped shape.

In this way, the lifting of the battery module 10 can be more stable.

According to some embodiments of the present application, optionally, particularly with reference to FIG. 3, the battery module 10 may be carried on a carrying tray 120. The lifting rod 110 is capable of lifting the carrying tray 120 from a position below the carrying tray 120 to indirectly lift the battery module 10, or the lifting rod 110 is capable of passing through a through opening 121 arranged in the carrying tray 120 to lift the battery module 10.

In a factory production line, the carrying tray 120 may be used to carry the battery module 10 so as to transfer the battery module 10 to various workstations. Thus, in this embodiment, the vertical movement of the battery module 10 by the lifting mechanism 100 can be implemented when the carrying tray 120 is present.

According to some embodiments of the present application, optionally, particularly with reference to FIG. 2 and FIG. 4, the flipping mechanism 200 can flip the battery module 10 around a central long axis of the battery module 10 in the longitudinal direction.

Here, the central long axis of the battery module 10 refers to an axis in a direction of a central long side of four long sides of the battery module 10.

Thus, in this embodiment, it helps to make the flipping operation of the battery module 10 more stable.

According to some embodiments of the present application, optionally, particularly with reference to FIG. 4 and FIG. 5, the flipping mechanism 200 may include a clamping apparatus 210 configured to clamp the battery module 10 and a flipping apparatus 220 configured to flip the battery module 10.

Thus, the flipping mechanism 200 for flipping the battery module 10 can be easily implemented.

According to some embodiments of the present application, optionally, particularly with reference to FIG. 4 and FIG. 5, the clamping apparatus 210 may include two clamping plates 211, configured to push the battery module 10 from the first end surface 11 and the second end surface 12 of the battery module 10 so as to clamp the battery module 10. The clamping apparatus 210 may further include two moving apparatuses, each for one of the clamping plates 211. Each moving apparatus may include: a slider 212 fixedly connected to one of the clamping plates 211, a driving cylinder 213 fixedly connected to the slider 212 to move the slider 212, and a slide rail 214 configured to guide the movement of the slider 212. When the driving cylinder 213 stretches out, the two clamping plates 211 can be driven to clamp the battery module 10. In this regard, in order to prevent the battery module 10 from being separated during the rotation process, the two clamping plates 211 may be provided with support bars at the bottom and top to prevent the battery module 10 from falling.

Thus, the clamping apparatus 210 can be implemented easily, thereby clamping the battery module 10 by the flipping mechanism 200.

According to some embodiments of the present application, optionally, particularly with reference to FIG. 4 and FIG. 5, the flipping apparatus 220 may include a flipping cylinder. The rotating cylinder is fixedly connected to the slide 212 on one hand, and is fixedly connected to one of the clamping plates 211 on the other hand.

Thus, the battery module 10 can be easily flipped by the flipping mechanism 200.

According to some embodiments of the present application, optionally, particularly with reference to FIG. 4 and FIG. 5, a photoelectric switch 240 may be arranged on the slider 212, and a blocking block configured to block the photoelectric switch 240 may be arranged on the clamping plate 211. When the clamping plate 211 rotates, the blocking block triggers a signal of the photoelectric switch, and thus the rotation position of the clamping plate 211 can be determined by the signal of the photoelectric switch. In this regard, a photoelectric switch 240 may be arranged on each side of the slider 212.

Thus, the photoelectric switch can be used to control the rotating cylinder, so that the flipping apparatus 220 can be flipped easily to meet the requirements of an angle, such as 180 degrees.

According to some embodiments of the present application, optionally, particularly with reference to FIG. 2 and FIG. 5, the first end surface image acquisition apparatus 310 can be constructed as at least one first end surface image acquisition camera (two first end surface image acquisition cameras in the embodiment of FIG. 2), and a first end surface illuminating component 330 is configured for the at least one first end surface image acquisition camera. Likewise, the second end surface image acquisition apparatus 320 may also be constructed as at least one second end surface image acquisition camera (two second end surface image acquisition cameras in the embodiment of FIG. 2 ), and a second end surface illuminating component 340 is configured for the at least one second end surface image acquisition camera. In this regard, the image of the first end surface 11 or the second end surface 12 of the battery module 10 may be formed by splicing the images captured by the various end surface image acquisition cameras. In particular, each end surface image acquisition camera may be an area array camera. In addition, a module PIN faces the end surface, and defects such as PIN deflection and damage can be detected and determined through the end surface image.

Thus, the second end surface image acquisition apparatus and the first end surface image acquisition apparatus can be implemented easily and the quality of the acquired image can be improved.

According to some embodiments of the present application, optionally, particularly with reference to FIG. 2 and FIG. 5, when the first end surface 11 and the second end surface 12 are surfaces where a wide side and a high side of the battery module 10 are located, an annular first end surface illuminating component may be configured for each first end surface image acquisition camera, and an annular second end surface illuminating component may be configured for each second end surface image acquisition camera.

Since the areas of the first end surface 11 and the second end surface 12 are relatively small, fewer acquisition cameras can be used to acquire the images thereof. Therefore, a corresponding annular illuminating component is configured for each acquisition camera, which can further improve the quality of the acquired image.

According to some embodiments of the present application, optionally, particularly with reference to FIG. 2 and FIG. 6, the second image acquisition apparatus 410 may be constructed as at least one second image acquisition camera, and a second illuminating component 420 is configured for the at least one second image acquisition camera. In this regard, the image of the first side surface 13 or the second side surface 14 of the battery module 10 may be formed by splicing the images captured by the various second image acquisition cameras. In particular, each second image acquisition camera may be an area array camera.

In this way, the second image acquisition apparatus can be implemented easily and the quality of the acquired image can be improved.

According to some embodiments of the present application, optionally, particularly with reference to FIG. 2 and FIG. 6, when the first side surface 13 and the second side 14 as well as the third side surface 15 and the fourth side 16 are surfaces where the long sides of the battery module 10 are located, the at least one second image acquisition camera may include a plurality of second image acquisition cameras (three second image acquisition cameras in the embodiment of FIG. 6) arranged in a straight line in a direction of the long side of the battery module 10; and two second strip-shaped illuminating components are configured for the plurality of second image acquisition cameras, and the two second strip-shaped illuminating components are arranged symmetrically with respect to the straight line of the plurality of second image acquisition cameras, so that illumination light converges to the first side surface 13 or the second side surface 14.

In this way, the quality of the acquired image can be improved, and the device costs can be saved.

According to some embodiments of the present application, optionally, particularly with reference to FIG. 2 and FIG. 7, the third image acquisition apparatus 510 may be constructed as at least one third image acquisition camera, and a third illuminating component 520 is configured for the at least one third image acquisition camera. In this regard, the image of the third side surface 15 or the fourth side surface 16 of the battery module 10 may be formed by splicing the images captured by the various third image acquisition cameras. In particular, each third image acquisition camera may be an area array camera.

In this way, the third image acquisition apparatus can be implemented easily and the quality of the acquired image can be improved.

According to some embodiments of the present application, optionally, particularly with reference to FIG. 2 and FIG. 7, when the first side surface 13 and the second side surface 14 as well as the third side surface 15 and the fourth side surface 16 are surfaces where the long sides of the battery module 10 are located, the at least one third image acquisition camera may include a plurality of third image acquisition cameras (three third image acquisition cameras in the embodiment of FIG. 7) arranged in a straight line in a direction of the long side of the battery module 10; and two third strip-shaped illuminating components are configured for the plurality of third image acquisition cameras, and the two third strip-shaped illuminating components are arranged symmetrically with respect to the straight line of the plurality of third image acquisition cameras, so that illumination light converges to the third side surface 15 or the fourth side surface 16.

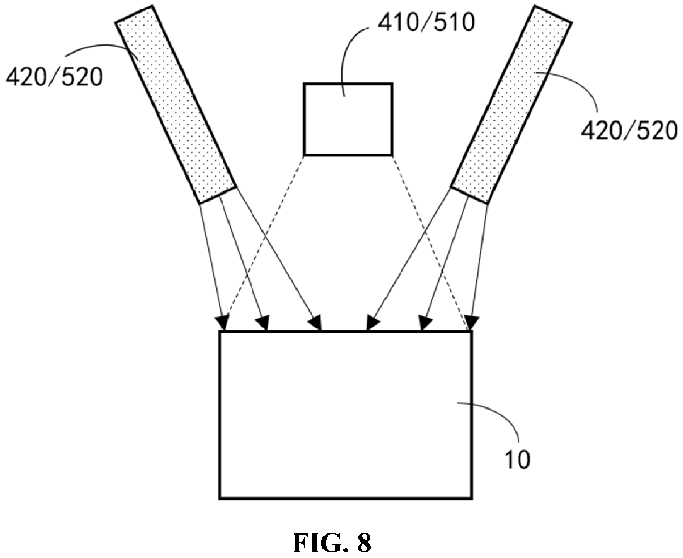

As shown in FIG. 8, two strip-shaped second illuminating components 420 may be arranged symmetrically with respect to the straight line of the second image acquisition apparatus 410, or two strip-shaped third illuminating components 520 may be arranged symmetrically with respect to the straight line of the third image acquisition apparatus 510. In this way, the illumination light of the second illuminating component 420 or the third illuminating component 520 can converge to a certain surface of the battery module 10 with the image acquired by a corresponding image acquisition apparatus thereof, so that the second image acquisition apparatus 410 or the third image acquisition apparatus 510 can acquire an image with better quality.

In this way, the quality of the acquired image can be improved, and the device costs can be saved.

According to some embodiments of the present application, optionally, the detection device further includes a control system. The control system may be in communication connection with the lifting mechanism 100, the flipping mechanism 200, and the at least one image acquisition mechanism, respectively.

The control system may be implemented as a computing apparatus in any type, a computing circuit, or a processor in any type, or a processing circuit capable of executing a series of instructions stored in a memory. The control system may include a plurality of processors and/or a multi-core central processing unit (CPU) and may include a processor in any type, such as a microprocessor, a digital signal processor, a microcontroller, or the like. The control system may also include a memory to store data and/or algorithms to execute a series of instructions. The control system may also be implemented as a computer program product or software product.

The control system may be used to control the lifting mechanism 100 and the flipping mechanism 200, so that the battery module 10 can be lifted and flipped, and the control system may be used to analyze the acquired images of the at least one image acquisition mechanism (including the first image acquisition mechanism 300, the second image acquisition mechanism 400, and the third image acquisition mechanism 500) and determine whether the corresponding appearance surface of the battery module 10 is qualified. Here, the control system can particularly use the corresponding detection model to identify whether various appearance surfaces of the battery module 10 have flaws (damage, scratches, pits, foreign matter, PIN deflection, etc.), and the detected battery module 10 can be transported to a next process of the assembly line or a reject region based on detection results.

According to some embodiments of the present application, with reference to FIG. 2 to FIG. 7, the present application provides a detection device 20 for detecting the appearance of a battery module 10.

The detection device 20 includes a lifting mechanism 100. The lifting mechanism 100 can move the battery module 10 in a vertical direction, so that the battery module 10 can stay at at least two heights different from an initial height. The lifting mechanism 100 may include two lifting rods 110 being capable of being driven by a driving apparatus and arranged in a direction of a long side of the battery module 10 in a rectangular parallelepiped shape. Each lifting rod 110 can lift the battery module 10 from a position below the battery module 10, and a support plate 111 is arranged on an end portion of each lifting rod 110 close to the battery module 10.

The detection device 20 further includes a flipping mechanism 200. The flipping mechanism 200 can flip the battery module 10 around a central long axis of the battery module 10. The flipping mechanism 200 may include a clamping apparatus 210 configured to clamp the battery module 10 and a flipping apparatus 220 configured to flip the battery module 10. The clamping apparatus 210 includes two clamping plates 211, configured to push the battery module 10 from the first end surface 11 and the second end surface 12 of the battery module 10 so as to clamp the battery module 10, and two moving apparatuses each used for one of the clamping plates 211, where each moving apparatus includes a slider 212 fixedly connected to one of the clamping plates 211, a driving cylinder 213 fixedly connected to the slider 212 to move the slider 212, and a slide rail 214 configured to guide movement of the slider 212.

The detection device 20 further includes a first image acquisition mechanism 300. The first image acquisition mechanism 300 is capable of acquiring images of the first end surface 11 and the second end surface 12 of the battery module 10, and includes two first end surface image acquisition cameras configured to acquire the image of the first end surface 11 of the battery module 10 and two second end surface image acquisition cameras configured to acquire the image of the second end surface 12 of the battery module 10; and a corresponding annular illuminating component is configured for each acquisition camera.

The detection device 20 further includes a second image acquisition mechanism 400. The second image acquisition mechanism 400 is capable of acquiring images of the first side surface 13 and the second side surface 14 of the battery module 10, and includes three second image acquisition cameras configured to acquire the images of the first side surface 13 and the second side surface 14 and arranged in a straight line; and two strip-shaped illuminating components arranged symmetrically with respect to the straight line of the three second image acquisition cameras are configured for the three second image acquisition cameras.

The detection device 20 further includes a third image acquisition mechanism 500. The third image acquisition mechanism 500 is capable of acquiring images of the third side surface 15 and the fourth side surface 16 of the battery module 10, and includes three third image acquisition cameras configured to acquire the images of the third side surface 15 and the fourth side surface 16 and arranged in a straight line; and two strip-shaped illuminating components arranged symmetrically with respect to the straight line of the three third image acquisition cameras are configured for the three third image acquisition cameras.

The detection device further includes a control system, and the control system is in communication connection with the lifting mechanism 100, the flipping mechanism 200, the first image acquisition mechanism 300, the second image acquisition mechanism 400, and the third image acquisition mechanism 500.

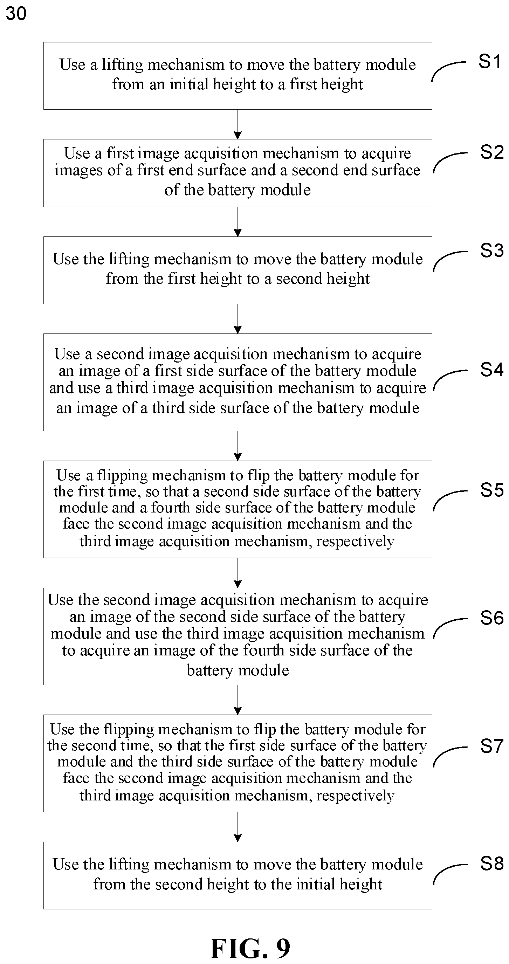

According to some embodiments of the present application, referring to FIG. 9, the present application provides a detection method 30 for detecting the appearance of a battery module 10 using the detection device disclosed in the present application.

In step S1, a lifting mechanism 100 may be used to move the battery module 10 from an initial height to a first height.

In step S2, a first image acquisition mechanism 300 may be used to acquire images of a first end surface 11 and a second end surface 12 of the battery module 10.

In step S3, the lifting mechanism 100 may be used to move the battery module 10 from the first height to a second height.

In step S4, a second image acquisition mechanism 400 may be used to acquire an image of a first side surface 13 of the battery module 10, and a third image acquisition mechanism 500 is used to acquire an image of a third side surface 15 of the battery module 10.

In step S5, a flipping mechanism 200 may be used to flip the battery module 10 by 180 degrees for the first time, causing the second side surface 14 of the battery module 10 and the fourth side surface 16 of the battery module 10 to face the second image acquisition mechanism 400 and the third image acquisition mechanism 500, respectively.

In step S6, the second image acquisition mechanism 400 may be used to acquire an image of the second side surface 14 of the battery module 10, and the third image acquisition mechanism 500 is used to acquire an image of the fourth side surface 16 of the battery module 10.

In step S7, the flipping mechanism 200 may be used to flip the battery module 10 by 180 degrees for the second time, causing the first side surface 13 of the battery module 10 and the third side surface 15 of the battery module 10 to face the second image acquisition mechanism 400 and the third image acquisition mechanism 500, respectively.

In step S8, the lifting mechanism 100 may be used to move the battery module 10 from the second height to the initial height.

Therefore, by lifting and flipping the battery module 10, the six appearance surfaces of the battery module 10 can be mechanically detected automatically. Moreover, since the six appearance surfaces of the battery module 10 can be detected at one workstation, the appearance of the six surfaces of the battery module can be detected in a smaller working region, which occupies a small area, thereby making it easier to introduce the detection method into the production line.

According to some embodiments of the present application, optionally, the first height may be greater than the second height.

Thus, the flipping mechanism 200 may be located at a lower position, which can facilitate mounting and arranging the flipping mechanism 200.

According to some embodiments of the present application, optionally, the detection method may further include: before or after the second image acquisition mechanism 400 is used to acquire the image of the first side surface 13 of the battery module 10 and the third image acquisition mechanism 500 is used to acquire the image of the third side surface 15 of the battery module 10, the flipping mechanism 200 is used to clamp the battery module 10 and the lifting mechanism 100 is lowered at least to a height at which flipping of the battery module 10 is not hindered.

In this way, the flipping operation of the flipping mechanism 200 can be easily implemented.

According to some embodiments of the present application, optionally, the detection method may further include: after the flipping mechanism 200 is used to flip the battery module 10 for the second time, the lifting mechanism 100 is raised to the second height, and the flipping mechanism 200 is caused to release the battery module 10.

In this way, the battery module 10 can be reset easily.

According to some embodiments of the present application, optionally, the detection method may further include: before the lifting mechanism 100 is used to move the battery module 10 from the initial height to the first height, whether the battery module 10 is on a detection station is detected; if the battery module 10 is on the detection station, a subsequent battery module 10 is caused to wait; and if the battery module 10 is not on the detection station, the subsequent battery module 10 is caused to enter the detection station.

In this way, automatic implementation of the detection device 20 and the detection method 30 can be facilitated.

According to some embodiments of the present application, optionally, the detection method may further include: after the lifting mechanism 100 is used to move the battery module 10 from the second height to the initial height, a control system is used to determine whether the acquired images of the first image acquisition mechanism 300, the second image acquisition mechanism 400, and the third image acquisition mechanism 500 are qualified; if the acquired images are qualified, the battery module 10 is caused to enter a next workstation; and if the acquired images are unqualified, the battery module 10 is caused to enter a reject region.

In this way, unqualified battery modules can be screened out easily.

According to some embodiments of the present application, optionally, the detection method may further include: after the lifting mechanism 100 is used to move the battery module 10 from the first height to the second height, first the second image acquisition mechanism 400 is used to acquire the image of the first side surface 13 of the battery module 10, and then the third image acquisition mechanism 500 is used to acquire the image of the third side surface 15 of the battery module 10.

In this way, different image acquisition mechanisms can be prevented from interfering with each other during image acquisition.

According to some embodiments of the present application, optionally, the detection method may further include: after the flipping mechanism 200 is used to flip the battery module 10 for the first time, first the second image acquisition mechanism 400 is used to acquire the image of the second side surface 14 of the battery module 10, and then the third image acquisition mechanism 500 is used to acquire the image of the fourth side surface 16 of the battery module 10.

In this way, different image acquisition mechanisms can be prevented from interfering with each other during image acquisition.

According to some embodiments of the present application, referring to FIG. 9, the present application provides a detection method 30 for detecting the appearance of a battery module 10 using the detection device disclosed in the present application. In the detection method 20, when the battery module 10 arrives at the detection station, the lifting mechanism 100 is used to raise the battery module 10 from the initial height to the first height, and then the first image acquisition mechanism 300 uses a first end surface image acquisition apparatus 310 and a second end surface image acquisition apparatus 320 to acquire images of the first end surface 11 and the second end surface 12 of the battery module 10, respectively. Next, the lifting mechanism 100 is used to lower the battery module 10 from the first height to the second height, and then the flipping mechanism 200 is used to clamp the battery module 10 and the lifting mechanism 100 is at least lowered to a height at which flipping of the battery module 10 is not hindered, and then the second image acquisition mechanism 400 is used to acquire the image of the first side surface 13 of the battery module 10 and the third image acquisition mechanism 500 is used to acquire the image of the third side surface 15 of the battery module 10. Next, the flipping mechanism 200 is used to flip the battery module 10 by 180 degrees for the first time, then the second image acquisition mechanism 400 is used to acquire the image of the second side surface 14 of the battery module 10, and then the third image acquisition mechanism 500 is used to acquire the image of the fourth side surface 16 of the battery module 10. Next, the flipping mechanism 200 is used to flip the battery module 10 by 180 degrees for the second time, then the lifting mechanism 100 is raised to the second height, and the flipping mechanism 200 is caused to release the battery module 10. Next, the lifting mechanism 100 is used to move the battery module 10 from the second height to the initial height. Next, the control system is used to determine whether the acquired images of the first image acquisition mechanism 300, the second image acquisition mechanism 400, and the third image acquisition mechanism 500 are qualified; if the acquired images are qualified, the battery module 10 is caused to enter the next workstation; and if the acquired images are unqualified, the battery module 10 is caused to enter the reject region.

Finally, it should be noted that, the above embodiments are merely used for describing the technical solution of the present application, instead of limiting the present application. Although the present application is described in detail with reference to the foregoing embodiments, those of ordinary skill in the art should understand that they can still make modifications on the technical solution recorded in the above embodiments, or perform equivalent replacements on all or a part of technical features thereof; these modifications or replacements are not intended to make the essences of the corresponding technical solutions depart from the scope of the technical solutions of the embodiments of the present application, and they shall all be included within the scope of the claims and the specification of the present application. In particular, the technical features mentioned in the various embodiments can be combined in any manner as long as there is no structural conflict. The present application is not limited to the specific embodiments disclosed herein, but includes all technical solutions falling within the scope of the claims.

## Claims

1. A detection device for detecting the appearance of a battery module, wherein a battery module (10) has a longitudinal direction, a transverse direction perpendicular to the longitudinal direction, and a depth direction perpendicular to the longitudinal direction and perpendicular to the transverse direction, and comprises a first end surface (11) and a second end surface (12) opposite to each other in the longitudinal direction, a first side surface (13) and a second side surface (14) opposite to each other in the depth direction, and a third side surface (15) and a fourth side surface (16) opposite to each other in the transverse direction,
the detection device (20) comprises:
a lifting mechanism (100), wherein the lifting mechanism (100) is capable of moving the battery module (10) in a vertical direction, so that the battery module (10) is capable of staying at a height different from an initial height;
a flipping mechanism (200), wherein the flipping mechanism (200) is capable of flipping the battery module (10);
a first image acquisition mechanism (300), wherein the first image acquisition mechanism (300) comprises a first end surface image acquisition apparatus (310) configured to acquire an image of the first end surface (11) of the battery module (10) and a second end surface image acquisition apparatus (320) configured to acquire an image of the second end surface (12) of the battery module (10);
a second image acquisition mechanism (400), wherein the second image acquisition mechanism (400) comprises a second image acquisition apparatus (410) configured to acquire images of the first side surface (13) and the second side surface (14);
a third image acquisition mechanism (500), wherein the third image acquisition mechanism (500) comprises a third image acquisition apparatus (510) configured to acquire images of the third side surface (15) and the fourth side surface (16);
wherein the lifting mechanism (100) is capable of causing the battery module (10) to stay at at least two heights different from the initial height, at a first height, the first end surface image acquisition apparatus (310) acquires the image of the first end surface (11), and the second end surface image acquisition apparatus (320) acquires the image of the second end surface (12); at a second height, the second image acquisition apparatus (410) acquires the images of the first side surface (13) and the second side surface (14), and the third image acquisition apparatus (510) acquires the images of the third side surface (15) and the fourth side surface (16); and
wherein the flipping mechanism (200) is capable of flipping the battery module (10), so that the first side surface (13) or the second side surface (14) of the battery module (10) and the third side surface (15) or the fourth side surface (16) of the battery module (10) face the second image acquisition mechanism (400) and the third image acquisition mechanism (500), respectively.

2. The detection device according to claim 1, wherein the lifting mechanism (100) comprises a lifting rod (110) being capable of being driven by a driving apparatus, and the lifting rod (110) is capable of lifting the battery module (10) from a position below the battery module (10) in the depth direction.

3. The detection device according to claim 2, wherein a support plate (111) is arranged on an end portion of the lifting rod (110) close to the battery module (10), and the support plate (111) is configured to support the battery module (10) from the position below the battery module (10) in the depth direction.

4. The detection device according to claim 2, wherein a plurality of lifting rods (110) are arranged in the longitudinal direction of the battery module (10), and configured to lift the battery module (10) from the position below the battery module (10) in the depth direction.

5. The detection device according to claim 2, wherein the battery module (10) is carried on a carrying tray (120);
the lifting rod (110) is capable of lifting the carrying tray (120) from a position below the carrying tray (120) to indirectly lift the battery module (10), or the lifting rod (110) is capable of passing through a through opening (121) arranged in the carrying tray (120) to lift the battery module (10).

6. The detection device according to any one of claims 1 to 5, wherein the flipping mechanism (200) flips the battery module (10) around a central long axis of the battery module (10) in the longitudinal direction, and the central long axis is an axis in a direction of a central long side of four long sides of the battery module (10).

7. The detection device according to any one of claims 1 to 5, wherein the flipping mechanism (200) comprises a clamping apparatus (210) configured to clamp the battery module (10) and a flipping apparatus (220) configured to flip the battery module (10).

8. The detection device according to claim 7, wherein the clamping apparatus (210) comprises:
two clamping plates (211), configured to push the battery module (10) from the first end surface (11) and the second end surface (12) of the battery module (10) so as to clamp the battery module (10); and
moving apparatuses used for the clamping plates (211), respectively, wherein each moving apparatus comprises: a slider (212) fixedly connected to the clamping plate (211), a driving cylinder (213) fixedly connected to the slider (212) to move the slider (212), and a slide rail (214) configured to guide movement of the slider (212).

9. The detection device according to claim 8, wherein the flipping apparatus (220) comprises a rotating cylinder, and the rotating cylinder is fixedly connected to both the slider (212) and one of the clamping plates (211).

10. The detection device according to claim 9, wherein a photoelectric switch (240) is arranged on the slider (212), and a blocking block configured to block the photoelectric switch (240) is arranged on the clamping plate (211).

11. The detection device according to any one of claims 1 to 5, wherein
the first end surface image acquisition apparatus (310) is constructed to comprise at least one first end surface image acquisition camera, and a first end surface illuminating component (330) is configured for the at least one first end surface image acquisition camera, and/or
the second end surface image acquisition apparatus (320) is constructed to comprise at least one second end surface image acquisition camera, and a second end surface illuminating component (340) is configured for the at least one second end surface image acquisition camera.

12. The detection device according to claim 11, wherein the first end surface (11) and the second end surface (12) are surfaces where a wide side and a high side of the battery module (10) are located, an annular first end surface illuminating component is configured for each first end surface image acquisition camera, and/or an annular second end surface illuminating component is configured for each second end surface image acquisition camera.

13. The detection device according to any one of claims 1 to 5, wherein the second image acquisition apparatus (410) is constructed to comprise at least one second image acquisition camera, and a second illuminating component (420) is configured for the at least one second image acquisition camera.

14. The detection device according to claim 13, wherein the first side surface (13) and the second side surface (14) as well as the third side surface (15) and the fourth side surface (16) are surfaces where the long sides of the battery module (10) are located; the at least one second image acquisition camera comprises a plurality of second image acquisition cameras arranged in a straight line in a direction of the long side of the battery module (10); and two second strip-shaped illuminating components are configured for the plurality of second image acquisition cameras, and the two second strip-shaped illuminating components are arranged symmetrically with respect to the straight line of the plurality of second image acquisition cameras.

15. The detection device according to any one of claims 1 to 5, wherein the third image acquisition apparatus (510) is constructed to comprise at least one third image acquisition camera, and a third illuminating component (520) is configured for the at least one third image acquisition camera.

16. The detection device according to claim 15, wherein the first side surface (13) and the second side surface (14) as well as the third side surface (15) and the fourth side surface (16) are surfaces where the long sides of the battery module (10) are located; the at least one third image acquisition camera comprises a plurality of third image acquisition cameras arranged in a straight line in a direction of the long side of the battery module (10); and two third strip-shaped illuminating components are configured for the plurality of third image acquisition cameras, and the two third strip-shaped illuminating components are arranged symmetrically with respect to the straight line of the plurality of third image acquisition cameras.

17. The detection device according to any one of claims 1 to 5, wherein the detection device further comprises a control system, and the control system is in communication connection with the lifting mechanism (100), the flipping mechanism (200), and the at least one image acquisition mechanism, respectively.

18. A detection method for detecting the appearance of a battery module (10) using the detection device for detecting the appearance of a battery module according to any one of claims 1 to 17, wherein the detection method comprises the following steps:
using a lifting mechanism (100) to move the battery module (10) from an initial height to a first height;
using a first image acquisition mechanism (300) to acquire images of a first end surface (11) and a second end surface (12) of the battery module (10);
using the lifting mechanism (100) to move the battery module (10) from the first height to a second height;
using a second image acquisition mechanism (400) to acquire an image of a first side surface (13) of the battery module (10) and using a third image acquisition mechanism (500) to acquire an image of a third side surface (15) of the battery module (10);
using a flipping mechanism (200) to flip the battery module (10) for the first time, so that a second side surface (14) of the battery module (10) and a fourth side surface (16) of the battery module (10) face the second image acquisition mechanism (400) and the third image acquisition mechanism (500), respectively;
using the second image acquisition mechanism (400) to acquire an image of the second side surface (14) of the battery module (10) and using the third image acquisition mechanism (500) to acquire an image of the fourth side surface (16) of the battery module (10);
using the flipping mechanism (200) to flip the battery module (10) for the second time, so that the first side surface (13) of the battery module (10) and the third side surface (15) of the battery module (10) face the second image acquisition mechanism (400) and the third image acquisition mechanism (500), respectively; and
using the lifting mechanism (100) to move the battery module (10) from the second height to the initial height.

19. The detection method according to claim 18, wherein the first height is greater than the second height.

20. The detection method according to claim 18 or 19, wherein the detection method further comprises: before or after using the second image acquisition mechanism (400) to acquire the image of the first side surface (13) of the battery module (10) and using the third image acquisition mechanism (500) to acquire the image of the third side surface (15) of the battery module (10), using the flipping mechanism (200) to clamp the battery module (10) and lowering the lifting mechanism (100) at least to a height at which flipping of the battery module (10) is not hindered.

21. The detection method according to claim 18 or 19, wherein the detection method further comprises: after using the flipping mechanism (200) to flip the battery module (10) for the second time, raising the lifting mechanism (100) to the second height, and causing the flipping mechanism (200) to release the battery module (10).

22. The detection method according to claim 18 or 19, wherein the detection method further comprises: before using the lifting mechanism (100) to move the battery module (10) from the initial height to the first height, detecting whether the battery module (10) is on a detection station; if the battery module (10) is on the detection station, causing a subsequent battery module (10) to wait; and if the battery module (10) is not on the detection station, causing the subsequent battery module (10) to enter the detection station.

23. The detection method according to claim 18 or 19, wherein the detection method further comprises: after using the lifting mechanism (100) to move the battery module (10) from the second height to the initial height, using a control system to determine whether the acquired images of the first image acquisition mechanism (300), the second image acquisition mechanism (400), and the third image acquisition mechanism (500) are qualified; if the acquired images are qualified, causing the battery module (10) to enter a next workstation; and if the acquired images are unqualified, causing the battery module (10) to enter a reject region.

24. The detection method according to claim 18 or 19, wherein the detection method further comprises: after using the lifting mechanism (100) to move the battery module (10) from the first height to the second height, first using the second image acquisition mechanism (400) to acquire the image of the first side surface (13) of the battery module (10), and then using the third image acquisition mechanism (500) to acquire the image of the third side surface (15) of the battery module (10).

25. The detection method according to claim 18 or 19, wherein the detection method further comprises: after using the flipping mechanism (200) to flip the battery module (10) for the first time, first using the second image acquisition mechanism (400) to acquire the image of the second side surface (14) of the battery module (10), and then using the third image acquisition mechanism (500) to acquire the image of the fourth side surface (16) of the battery module (10).
